**Europäisches Patentamt**

**European Patent Office**

**Office européen des brevets**

(19)

(11) Veröffentlichungsnummer: **0 019 707**
**B1**

(12) **EUROPÄISCHE PATENTSCHRIFT**

(45) Veröffentlichungstag der Patentschrift:
12.01.83

(51) Int. Cl.³: **G 06 F 3/02**

(21) Anmeldenummer: 80101920.9

(22) Anmeldetag: 10.04.80

(54) **Tastaturvorrichtung zur Datenerfassung und -kodierung.**

(30) Priorität: 29.05.79 US 43610

(43) Veröffentlichungstag der Anmeldung:
10.12.80 Patentblatt 80/25

(45) Bekanntmachung des Hinweises auf die Patenterteilung:
12.01.83 Patentblatt 83/2

(84) Benannte Vertragsstaaten:
DE FR GB

(56) Entgegenhaltungen:
,,IBM Technical Disclosure Bulletin'', Bd. 21, Nr. 9, Februar 1979, New York (US), P.A. Calcagno *et al.*: ,,Magneto-acoustic Keyboard'', S. 3843-3844.

(73) Patentinhaber: International Business Machines Corporation, Armonk, N.Y. 10504 (US)

(72) Erfinder: Thompson, David Allen, Twin Lakes Road, South Salem New York 10590 (US)
Erfinder: Worthington, Thomas Kimber, 86 Riverview Avenue, Tarrytown New York 10591 (US)

(74) Vertreter: Rudack, Günter O., Dipl.-Ing., c/o International Business Machines Corporation Zurich Patent Operations Säumerstrasse 4, CH-8803 Rüschlikon (CH)

Tastaturvorrichtung zur Datenerfassung und -kodierung

Die Erfindung betrifft eine Tastaturvorrichtung zur Datenerfassung und -kodierung, die eine Tastatur sowie eine magnetoakustische Verzögerungsleitung umfasst.

Sie erlaubt die präzise Steuerung der Dekodierung jener Signale, die mittels der magnetoakustischen Verzögerungsleitung erzeugt worden sind, unabhängig von äusseren Einflüssen wie, beispielsweise, Temperaturänderungen. Sie bezweckt ausserdem die eindeutige Identifizierung jedes erzeugten Datensignals.

Es ist bereits bekannt (vgl. „IBM TDB", vol. 21, Nr. 9, Febr. 1979, S. 3843), dass magnetoakustische Impulse entlang einer magnetostriktiven Leitung gesandt werden können, wobei die Impulserzeugung durch Bewegung eines Permanentmagneten zur Leitung hin zustande kommt. Wird ein elektrisches Signal an die Enden der Leitung gelegt, so erzeugt dies ein die Leitung umgebendes Magnetfeld, das durch die erwähnte Bewegung eines Permanentmagneten verändert wird. Bei dieser Art Einrichtung ergibt sich aber das Problem, dass die Zeit zur Fortpflanzung eines Signals entlang dem Draht der Verzögerungsleitung sich in Funktion der Temperatur und weiterer Faktoren ändert. Dies hat bisher stets Fehler verursacht. Die vorliegende Erfindung ermöglicht es nun, solche Fehler zu vermeiden, da durch sie die Herkunft der am Ausgang der Verzögerungsleitung eintreffenden Signale fehlerfrei bestimmbar ist.

Die im ersten Patentanspruch definierte Erfindung ist dadurch gekennzeichnet, dass an jeder Datenposition entlang der Verzögerungsleitung wenigstens zwei Magnete vorhanden sind, von denen der erste in unveränderlicher Lage bezüglich der Verzögerungsleitung zur Erzeugung eines Synchronisationssignales befestigt, und wenigstens ein zweiter, durch eine Taste betätigbar, beweglich angeordnet ist, wobei abhängig von der Tastenbetätigung jeder zweite Magnet zur Erzeugung eines an das betreffende Synchronisationssignal anschliessenden Datensignals befähigt ist.

Die vorliegende Erfindung wird nachstehend in Ausführungsbeispielen und anhand der zugehörigen Zeichnungen genauer erläutert. Es zeigen:

Fig. 1 ein elektronisches Schaltschema sowie die Darstellung eines Tastaturmechanismus,

Fig. 2 eine Darstellung magnetoakustischer bzw. elektrischer Impulse in Funktion der Zeit, wobei auf der oberen Linie die im Schieberegister der Fig. 1 eintreffenden Impulse abgebildet sind, und auf der unteren Linie die dem Draht der Verzögerungsleitung zugeführten Taktimpulse,

Fig. 3 eine Variante der Darstellung von Fig. 1, die erweiterte Magnete zur Erzeugung ganzer Impulsgruppen für jede Datenposition sowie einen Hüllkurvengleichrichter verwendet, der die von der Tastenstellung abhängigen Signale an die Elektronik liefert,

Fig. 4 eine Impulsdarstellung ähnlich jener von Fig. 2, aber gültig für die Variante von Fig. 3,

Fig. 5 eine Darstellung ähnlich jener von Fig. 1 mit Tasten, die drei Stellungen und zwei betätigbare Magnete zusätzlich zu einem dritten, feststehenden Magneten aufweisen,

Fig. 6 eine Impulsdarstellung ähnlich der von Fig. 2, jedoch für das Ausführungsbeispiel von Fig. 5, und

Fig. 7 die Schaltung für eine andere Wicklungsanordnung der Sensorspulen der Fig. 1, 3 und 5.

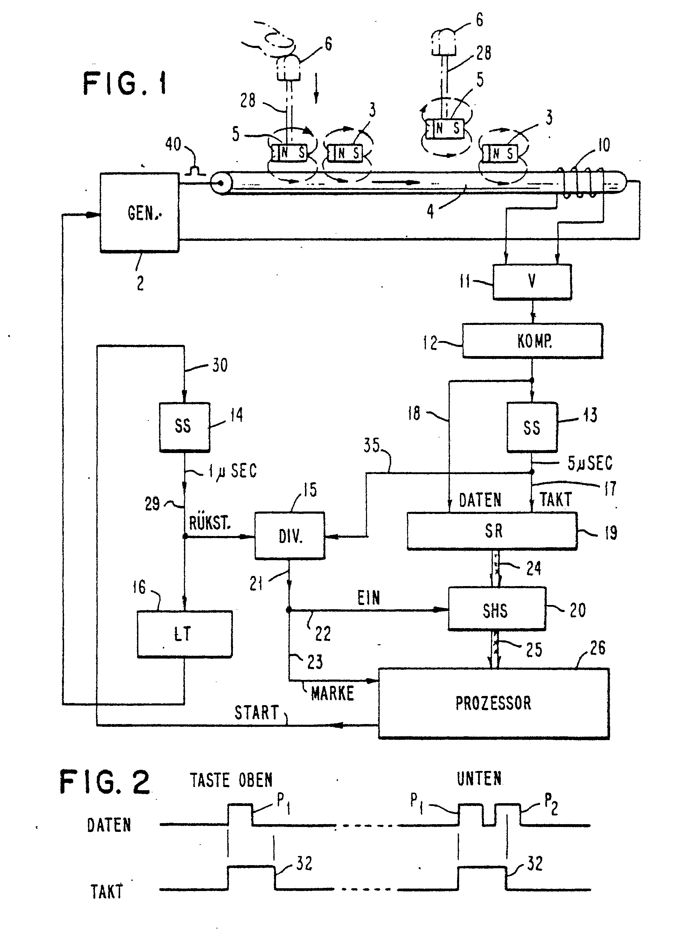

Die magnetoakustische Einrichtung mit Tastatur der Fig. 1 ist nur eine fragmentarische Darstellung einer solchen, die einen einzelnen magnetostriktiven Draht 4 umfasst. Letzterer ist in Serpentinen angeordnet (in der Figur nicht gezeigt), damit er unter jeder Tastenposition der Tastatur hindurchgeführt und als Verzögerungsleitung verwendet werden kann. Unter jeder Taste 6 ist an ihr ein beweglicher Magnet 5 mittels einer mechanischen Verbindung 28 (gestrichelt gezeichnet) befestigt. Die Magnete 3 und 5 sind vorzugsweise Permanentmagnete, aber es können auch Elektromagnete oder eine Mischung beider verwendet werden. In unmittelbarer Nähe jedes beweglichen Magneten 5 befindet sich ein die Position anzeigender Magnet 3, der in dieser Position unverrückbar direkt neben dem Draht 4 befestigt ist. Ein Generator 2 erzeugt Erregerimpulse 40 (Fig. 1), die dem Draht 4 zugeführt und zum Abfragen der Tastatur benötigt werden. Daher fliesst ein elektrischer Strom durch den Draht 4, der ein über die ganze Länge des Drahtes sich erstreckendes Umfangsmagnetfeld erzeugt.

Bei völligem Fehlen der Magnete 3 und 5 ruft das vorhandene Umfangsmagnetfeld am Draht 4 keine magnetostriktive Wirkung hervor. Liegen aber die Magnete 3 und 5 nahe am Draht und sind gegenüber letzterem korrekt orientiert, dann erzeugt in Gegenwart des Umfangsmagnetfeldes jeder Magnet 3 oder 5 eine akustische Torsionsschwingung $P_1$ bzw. $P_2$ (Fig. 2), die dem Draht 4 entlang bis zur Abtastspule 10 wandert. Letztere ist um den Draht 4 gewickelt. Eine Bewegung des Magneten 5 aus der korrekt orientierten, aktiven Position heraus verändert das Magnetfeld um den Draht 4, von diesem aus betrachtet, und eliminiert oder ändert die akustische Schwingung $P_2$. Rotation des Magneten 5 oder eine Hin- und Her-Bewegung, wie in Fig. 1 angedeutet, erzeugt diese Wirkung. Offensichtlich kann mit einem Tastenmechanismus durch dessen Betätigung die Lage des Magneten vor- oder zurückverlegt werden. Die akustischen Scherschwingungen $P_1$ und $P_2$ pflanzen sich ungefähr mit Schallgeschwindigkeit von 2500 m/s fort. Die Zeitverzögerung zwischen dem durch den Erregerimpuls ausgelösten Stromanstieg im Draht 4 und dem Eintreffen des Impulses bei der Spule 10 gibt an, welche der verschiedenen Tasten 6 der Tastatur betätigt worden ist.

Der Draht 4 kann durch Plattieren eines getreckten Drahtes mit magnetostriktivem Material in einem längsgerichteten Umfangsmagnetfeld hergestellt werden. Beispielsweise kann dazu ein Berylliumkupferdraht von 250 µm Dicke mit einer Schicht von 2 µm 1/1-Nickeleisenlegierung plattiert und mit einer in Umfangsrichtung weisenden, leichten Magnetisierungsachse versehen werden.

Es hat sich in der Vergangenheit herausgestellt, dass bei einem einzelnen, beweglichen Magneten 5 pro Taste die Impulserfassung fehlerhaft ausfallen kann. Dies tritt besonders dann ein, wenn die Synchronisation mit externen Taktgebern problematisch wird. Dies wiederum ist die Folge von Änderungen der Fortpflanzungsgeschwindigkeit akustischer Energie auf einem Draht 4 in Abhängigkeit von der Temperatur und anderen ähnlichen Faktoren. Die Verwendung von Magneten 3 zur Positionsanzeige ergibt Signale, die in Verbindung mit der zugehörigen elektronischen Schaltung die Selbsttaktierung ermöglichen, und dadurch die Abhängigkeit von der Schallfortpflanzungsgeschwindigkeit aufheben.

Das Steuergerät umfasst eine Start leitung 30 zwischen dem Prozessor 26 und der monostabilen Kippschaltung SS 14 mit einer Aktivierungszeit von 1 µs, die auf der Leitung 29 ein Ausgangssignal abgibt. Durch dieses wird eine Teilerschaltung 15, welche durch 8 dividiert, zurückgestellt, und der Leitungstreiber 16 angestossen, der seinerseits den Impulsgenerator 2 dazu veranlasst, einen Stromimpuls an den Draht 4 abzugeben. Akustische Schwingungen werden durch die verschiedenen Magnete dem Draht entlang alle gleichzeitig erzeugt, aber sie erreichen die Sensorspule 10 als eine von den Tasten 6 stammende Serie von akustischen Impulsen. Sie gelangen von der Spule 10 zum Verstärker 11, dann zum Komparator 12 und an die monostabile Kippschaltung 13 mit einer Aktivierungszeit von 5 µs. Das Ausgangssignal der Kippschaltung 13 ist ein Taktimpuls 32 (Fig. 2) auf der Leitung 17, dessen abfallende, hintere Flanke das angeschlossene Schieberegister 19 weitertaktet. War die Taste 6 heruntergedrückt, dann kommt zu diesem Zeitpunkt ein weiterer Datenimpuls $P_2$ an und am Ausgang des Komparators 12 erscheint wieder eine 1. Da die monostabile Kippschaltung 13 eingeschaltet bleibt, wird sie nicht neu getriggert, und die 1 wird über die Leitung 18 und den Dateneingang in das Seriell/Parallel-Schieberegister 19 eingegeben, wenn das Taktsignal 32 der Kippschaltung 13 abfällt. Wäre die Taste 6 mit ihrem Magneten 5 nicht gedrückt gewesen, dann hätte die Eingabe in das Schieberegister 19 0 gelautet.

Wenn die Impulse von acht Tasten bei der Spule 10, in der monostabilen Kippschaltung 13, usw. eingetroffen sind, dann bewirken die Ausgangssignale auf der Leitung 35, welche an die Teilerschaltung 15 gelangt sind, eine Signalabgabe auf der Leitung 21, welche die Selbsthalteschalter 20 vorbereitet und eine Marke auf der Leitung 23 in den Prozessor 26 eingibt. Die Selbsthalteschalter 20 behalten den Wert, den sie vom Schieberegister 19 über das Verbindungskabel 24 empfangen haben, und geben ihn sofort über das Kabel 25 an den Prozessor 26 weiter. Die kürzeste Zeit, die ein akustischer Impuls benötigt, um sich von Taste zu Taste fortzupflanzen, wurde in der bevorzugten Ausführung mit 8 µs bestimmt. Demnach hat der Prozessor 26 insgesamt 64 µs Zeit, um 8 Bits zu speichern und sich für das nächste Byte bereit zu halten.

Der Vorteil dieser Technik liegt darin, dass die Synchronisation in einer viel kürzeren Zeitspanne erfolgt, d.h. in etwa 5 µs, so dass deren Genauigkeit von etwa ± 0,5 µs oder ± 10% ausreichend ist. Diese Genauigkeit kann bei Verwendung von TTL-Schaltungen leicht eingehalten werden.

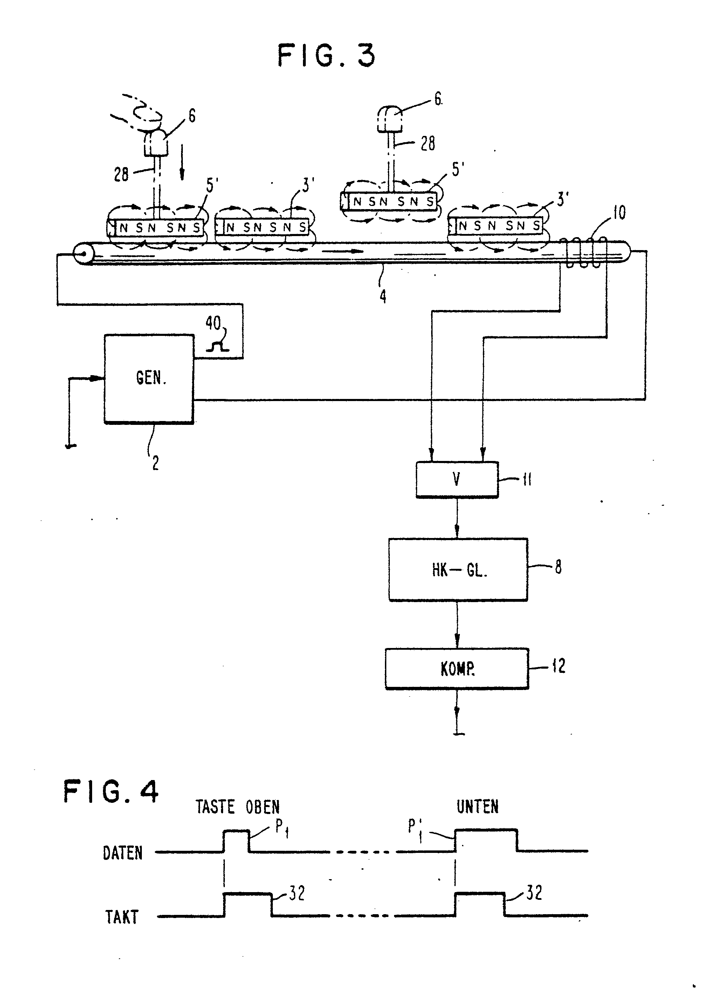

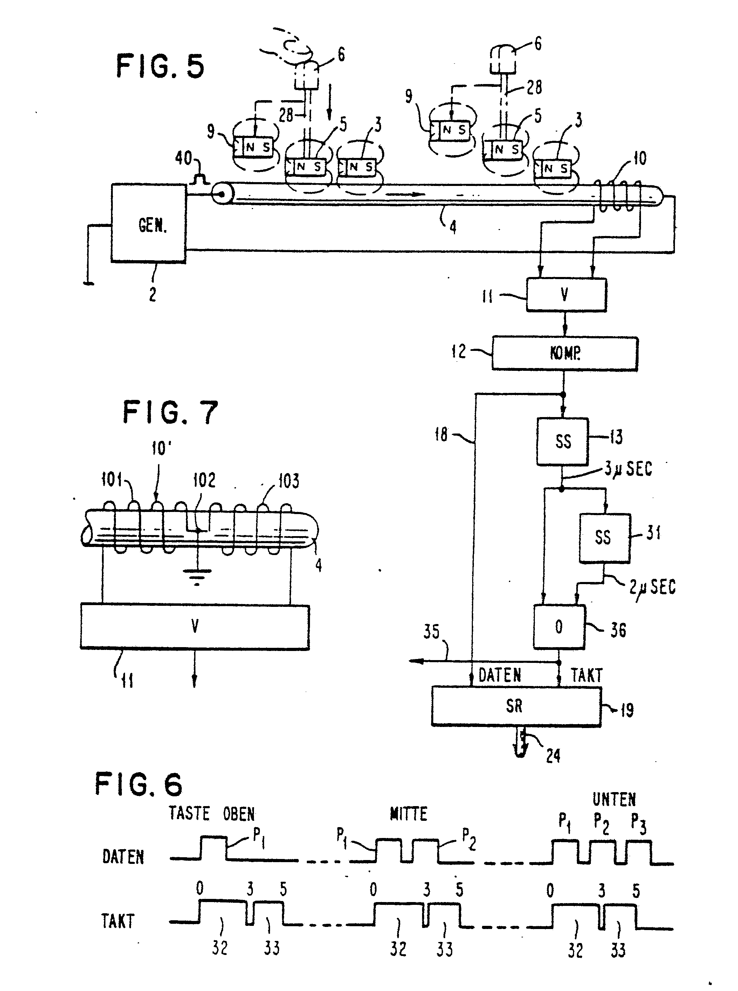

Einen anderen Weg zur Ausführung dieser Technik zeigen die Fig. 3 und 4. Dabei werden mehrpolige Magnete 3' und 5' verwendet und die Sensorspule (Fig. 7) so geplant, dass ein Impulsbündel erzeugt wird, dessen Länge sich bei Betätigung der Taste 6 ändert. Dieses Bündel wird zur Verarbeitung einem Hüllkurvengleichrichter 8 zugeführt, der gleichrichtet und das Signal glättet. Dieses ist daher am Ausgang des Komparators 12 ein einzelner Impuls veränderlicher Breite anstelle von zwei getrennten Impulsen. Die übrige elektronische Dekodierschaltung ist dieselbe wie in der Darstellung von Fig. 1.

Die Magnete 3' und 5' sind längs dem Draht 4 nahe beieinander angeordnet, obwohl für die mechanische Betätigung durch die Taste 6 ein Spielraum nötig ist. Das Magnetfeld weist bei dieser Lücke genügend Streuung auf, so dass der zulässige Abstand zwischen den Magneten 3' und 5' längs dem Draht 4, wenn die Taste 6 gedrückt ist, reichlich gross sein kann. Wichtig ist nur, dass der Impuls $P_1'$ keinen wesentlichen Abfall zwischen der vorderen und hinteren Flanke aufweist, weil dies die Signalabgabe des Hüllkurvengleichrichters 8 von einem einzelnen Rechteckimpuls zu zwei getrennten Impulsen für eine einzige Tastenposition verändern könnte. Die Nord- und Südpolpaare erzeugen Muster von Sinusschwingungen, die dem Draht 4 entlanglaufen, und zwar eine ganze Schwingung je Polpaar. Wenn also Magnet 5' oben ist und Magnet 3' in seiner korrekten Position, dann wird ein Satz von drei akustischen Schwingungen an Energie dem Draht entlanglaufen. Ist die Taste 6 gedrückt und übt Magnet 5' Wirkung auf den Draht 4 aus, dann laufen sechs ganze Schwingungen über den Draht. In jedem Fall erzeugt der Hüllkurvengleichrichter 8 einen entsprechenden Rechteckimpuls, dessen Breite eine Funktion der Bündellänge ist. Dies ist das Kodierverfahren für die als Bündel auftretenden Signale.

Die mehrpoligen Magnete 3' und 5' können dadurch hergestellt werden, dass streifenförmiges Magnetmaterial in Stücke mit Nord- und Südpol geschnitten wird. Diese Stücke werden anschliessend auf einem Träger beispielsweise mittels eines Epoxidklebstoffes befestigt. Als Alternative hiezu können für die Magnete 3' und 5' auch Stücke von magnetisierbarem Material verwendet werden, die man zur Bildung mehrerer Nord- und Südpole in Reihe durch hintereinandergeschaltete Drahtschleifen, die zueinander parallel liegen und mit einem starken elektrischen Strom erregt werden, magnetisiert.

Der Vorteil des Verfahrens mit den breiten Impulsen ist darin zu sehen, dass die absolute Lage des eintreffenden Impulses keine Bedeutung hat, d.h. es ist nicht ersichtlich, ob der Impuls $P_1'$ durch Verlängerung von $P_1$ vorn oder hinten entstanden ist. Wird das Verfahren mit den zwei getrennten Impulsen benutzt, dann muss in jeder Tastenreihe die Reihenfolge der feststehenden und betätigbaren Magnete vertauscht werden, da der Draht 4 in Serpentinen darunter angeordnet ist.

Die Verwendung von mehr als einem Magneten kann auch auf drei Magnete pro Tastenposition ausgedehnt werden. Dies gestattet den Einsatz automatischer Wiederholungs- und Mehrfunktionentasten (sog. Dauertaste) mit zwei verschiedenen Betätigungsstufen. Diese Magnete werden so angeordnet, dass die Ausgangssignale durch 100, 110 oder 111 wiedergegeben werden, je nachdem ob die Taste in oberer Ruhestellung, in der Mitte oder unten auf Dauerfunktion steht. Die Signalfolge könnte aber u.a. auch 100, 110 und 111 lauten.

Die Fig. 5 zeigt eine Einrichtung mit drei Magneten pro Taste 6, die eine Variante der Fig. 1 darstellt. Hier kann eine Taste in zwei verschiedene Stellungen gedrückt und dadurch zwei verschiedene Werte erzeugt werden. Die Magnete 3 und 5 sind dieselben wie bisher, aber für jede Taste 6 gibt es noch einen dritten Magneten 9, der ähnlich wie Magnet 5 betätigbar ist. Der zusätzliche Magnet 9 lässt sich dank der mechanischen Verbindung 28 zwischen der Taste 6 und beiden Magneten 5 und 9 bewegen, wobei Magnet 5 zuerst und danach erst Magnet 9 betätigt wird. Letzteres geschieht nur dann, wenn die Taste 6 mit zusätzlicher Kraft weiter hinunter oder stärker gedrückt wird. Wie in Fig. 1 erzeugen die Magnete 3, 5 und 9 akustische Impulse, welche ihrerseits die Impulse $P_1$, $P_2$ bzw. $P_3$ hervorbringen, die in Fig. 6 als rechteckige Ausgangssignale des Komparators 12 dargestellt sind. Sie treffen bei der Sensorspule 10 in der Reihenfolge $P_1$ erzeugt vom Magneten 3, dann $P_2$ vom Magneten 5 und zuletzt $P_3$ für jede der Tastenpositionen ein.

Von der Spule 10 werden sie an den Verstärker 11 und über den Komparator an die monostabile Kippschaltung 13 weitergeleitet. Letztere taktet das Schieberegister über ein ODER-Glied 36 mittels der hinteren, abfallenden Flanke des Impulses 32, den sie erzeugt, und zwar, wie Fig. 6 zeigt, 3 µs nach der zeit t = 0. Dieser Zeitpunkt liegt ungefähr in der Mitte des Impulses $P_2$, der vom Magneten 5 stammt. Ist also die Taste 6 betätigt worden, dann trifft der Impuls $P_2$ ein und am Ausgang des Komparators 12 erscheint eine 1, die über Leitung 18 ins Schieberegister aufgenommen wird, da während der Impulsdauer von $P_2$ das ODER-Glied ein Signal abgibt. Der Eingangstaktimpuls 32 fällt erst 3 µs nach der Zeit t = 0 ab. Als nächstes wird eine weitere monostabile Kippschaltung 31 durch die abfallende Flanke des Ausgangsimpulses 32 der Kippschaltung 13 angestossen. Das Ausgangssignal 33 der Kippschaltung 31 fällt nach weiteren 2 µs ab, wenn die Zeit t = 5 µs abgelaufen ist. Dadurch erlischt auch das Ausgangssignal des ODER-Gliedes 36 und taktet noch einmal das Schieberegister 19 zur Übernahme des zweiten Datenbits $P_3$ über den Dateneingang an der Leitung 18, sofern überhaupt ein solcher Impuls eines Magneten 9 zur Zeit t = 5 bei der Spule 10 eingetroffen ist.

Die Fig. 7 zeigt eine geänderte Sensorspule 10', die anstelle der bisherigen Spule 10 verwendet wird. Die neue Spule besteht aus einem Teil 101, der als rechtsläufige Schraubenlinie um den Draht 4 herum gewickelt ist. Ein zweiter Teil 103 der Spule 10' ist linksläufig gewickelt. Die beiden Teile sind in Verbindungspunkt 102, wenn erwünscht, mit Erdpotential verbunden. Der Vorteil dieser Anordnung besteht darin, dass längerwellige Wechselstromschwingungen, z.B. 60 Hz-Brumm in der Spulenumgebung, auskompensiert werden. Die Länge eines Spulenteils wird etwa gleich der Strecke zwischen den Magnetpolen gemacht.

## Patentansprüche

1. Tastaturvorrichtung zur Datenerfassung und -kodierung, die eine Tastatur sowie eine magnetoakustische Verzögerungsleitung (4) umfasst, dadurch gekennzeichnet, dass an jeder Datenposition entlang der Verzögerungsleitung wenigstens zwei Magnete vorhanden sind, von denen der erste (3) in unveränderlicher Lage bezüglich der Verzögerungsleitung zur Erzeugung eines Synchronisationssignales befestigt, und wenigstens ein zweiter (5), durch eine Taste (6) betätigbar, beweglich angeordnet ist, wobei abhängig von der Tastenbetätigung jeder zweite Magnet (5) zur Erzeugung eines an das betreffende Synchronisationssignal anschliessenden Datensignals befähigt ist.

2. Tastaturvorrichtung nach Anspruch 1, dadurch gekennzeichnet, dass die genannten Magnete (3, 5) permanente Magnetdipole sind, dass der genannte zweite, betätigbare Magnet (5) mit der Taste durch Vorspannung in einer Ruhestellung von der Verzögerungsleitung (4) entfernt gehalten ist, und dass die Verzögerungsleitung einen magnetostriktiven Draht (4) umfasst, daran ein Impulsgenerator (2) angeschlossen und eine Sensorspule (10) angekoppelt ist.

3. Tastaturvorrichtung nach Anspruch 1, dadurch gekennzeichnet, dass die genannten Magnete (3, 5) im wesentlichen parallel zur Achse der Verzögerungsleitung (4) ausgerichtet sind.

4. Tastaturvorrichtung nach Anspruch 1, dadurch gekennzeichnet, dass jeder der genannten Magnete (3, 5) aus mehreren in Reihe gesetzten Magnetdipolen zur Erzeugung eines Impulsbündels besteht, dass an die Verzögerungsleitung (4) eine Sensorspule (10) gekoppelt und mit einem Hüllkurvengleichrichter (8) verbunden ist.

5. Tastaturvorrichtung nach Anspruch 1, dadurch gekennzeichnet, dass mit der Taste (6) einer Datenposition mehr als ein betätigbarer Magnet verbunden ist, dass diese Magnete durch eine mechanische Kopplung (28) mit der Taste differentiell betätigbar sind, dass ferner eine Sensorspule (10) an die Verzögerungsleitung (4) gekoppelt und mit einer Schaltungsanordnung zur Verarbeitung von mehreren Datensignalen pro Synchronisationssignal verbunden ist.

## Claims

1. Data recording and coding keyboard device comprising a keyboard and a magneto-acoustic delay line (4), characterized in that, at each data position along the delay line, at least two magnets are provided, the first one of which is in a fixed position with respect to the delay line, for generating a synchronization signal, while at least one second magnet (5) is movable by a key (6), the arrangement being such that every second magnet (5) as a function of key actuation is capable of generating a data signal adjacent to the corresponding synchronization signal.

2. Keyboard device according to claim 1, characterized in that said magnets (3, 5) are permanent dipole magnets, that said second magnet (5) with the key is biased away from the delay line (4) to a rest position, and that the delay line comprises a magnetostrictive wire (4) to which a pulse generator (2) is connected and a pickup coil (10) is coupled.

3. Keyboard device according to claim 1, characterized in that said magnets (3, 5) are aligned substantially parallel with the axis of the delay line (4).

4. Keyboard device according to claim 1, characterized in that each of said magnets (3, 5) consists of several magnet dipoles arranged in a row for generating a pulse burst, that a pickup coil (10) is coupled to the delay line (4) and is connected to an envelope detector (8).

5. Keyboard device according to claim 1, characterized in that a plurality of movable magnets are associated with the key (6) of a data position, that said magnets are differentially movable by mechanical interconnection (28) with the key, and that a pickup coil (10) is coupled to the delay line (4) and is connected to circuitry for processing a plurality of data signals for each synchronization signal.

## Revendications

1. Dispositif à clavier pour la saisie et le codage de données, comportant un clavier ainsi qu'une ligne retard magnéto-acoustique (4), caractérisé en ce que chaque position de données le long de la ligne à retard comporte au moins deux aimants, dont le premier (3) est monté dans une position fixe par rapport à la ligne à retard pour générer un signal de synchronisation et dont au moins un second (5), pouvant être actionné par une touche (6), est monté de façon mobile, chaque second aimant (5) pouvant, en fonction de l'enfoncement de la touche, générer un signal de données adjacent audit signal de synchronisation.

2. Dispositif à clavier selon la revendication 1, caractérisé en ce que lesdits aimants (3, 5) sont des aimants bipolaires permanents, en ce que ledit second aimant actionnable (5) avec la touche peut être tenu à distance de la ligne à retard (4) dans une position de repos par une force de rappel, et en ce que la ligne à retard comporte un fil magnétostrictif (4) auquel est connecté un générateur d'impulsions (2) et couplée une bobine de détection (10).

3. Dispositif à clavier selon la revendication 1, caractérisé en ce que lesdits aimants (3, 5) sont disposés essentiellement en parallèle par rapport à l'axe de la ligne de retard (4).

4. Dispositif à clavier selon la revendication 1, caractérisé en ce que chacun desdits aimants (3, 5) est composé de plusieurs dipôles d'aimant en série pour générer un paquet d'impulsions, en ce que la ligne à retard (4) est couplée à une bobine de détection (10) et connectée à un redresseur d'enveloppe (8).

5. Dispositif à clavier selon la revendication 1, caractérisé en ce que plus d'un aimant actionnable est connecté à la touche (6) d'une position de données, en ce que lesdits aimants peuvent être actionnés de façon différentielle à l'aide d'un couplage mécanique (28) avec la touche, et en ce qu'en outre une bobine de détection (10) est couplée à la ligne à retard (4) et connectée à un ensemble de circuits pour traiter plusieurs signaux de données par signal de synchronisation.

FIG. 1

FIG. 2

# FIG. 3

# FIG. 4

# FIG. 5

# FIG. 7

# FIG. 6